(19) **Europäisches Patentamt / European Patent Office / Office européen des brevets**

(11) **EP 1 769 946 B1**

(12) **EUROPEAN PATENT SPECIFICATION**

(45) Date of publication and mention
of the grant of the patent:
**02.09.2009 Bulletin 2009/36**

(51) Int Cl.:
**B60C 11/12** (2006.01)

(21) Application number: **05765355.2**

(86) International application number:
**PCT/JP2005/011822**

(22) Date of filing: **28.06.2005**

(87) International publication number:
**WO 2006/001446 (05.01.2006 Gazette 2006/01)**

(54) **PNEUMATIC TIRE**

LUFTREIFEN

BANDAGE PNEUMATIQUE

(84) Designated Contracting States:
**DE ES FI FR GB IT**

(30) Priority: **28.06.2004 JP 2004189818**

(43) Date of publication of application:
**04.04.2007 Bulletin 2007/14**

(73) Proprietor: **Bridgestone Corporation**
**Tokyo 104-8340 (JP)**

(72) Inventor: **SAKAMAKI, Yuji,**
**c/o BRIDGESTONE CORPORATION**
**Tokyo 1048340 (JP)**

(74) Representative: **Whalley, Kevin**
**Marks & Clerk LLP**
**90 Long Acre**
**London WC2E 9RA (GB)**

(56) References cited:
**JP-A- 2000 006 618        JP-A- 2000 006 619**
**JP-A- 2002 321 509        JP-A- 2004 161 166**
**JP-A- 2005 041 393        JP-A- 2005 193 867**

**Description**

Technical Field

The present invention relates to a pneumatic tire, and in particular, to a pneumatic tire having, at a tread, blocks which have sipes.

Background Technology

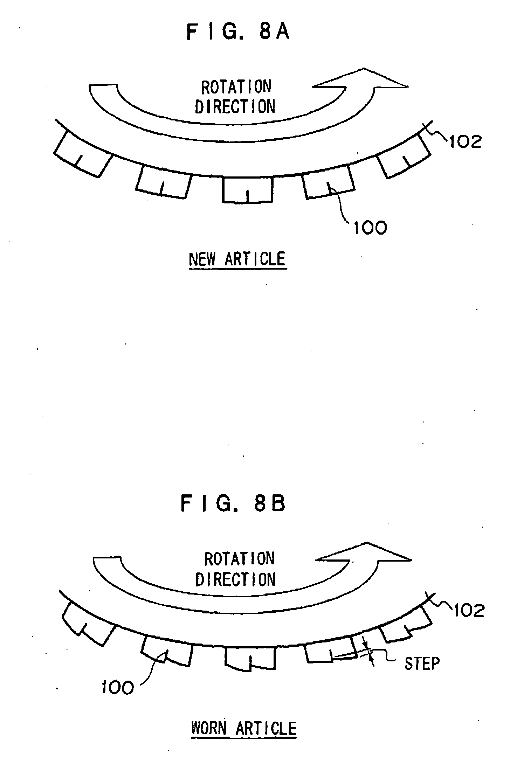

It is known that, at a tire 102 (e.g., Patent Documents 1, 2) of a block pattern having sipes 100 which extend in the tire axial direction as shown in Fig. 8A, generally, as a block 104 becomes worn, the degree of wear differs in front of and at the rear of the sipe, and, as shown in Fig. 8B, a step in the peripheral direction (so-called heel-and-toe wear) arises, and the degree thereof is great in particular at the portion which opens to a main groove.

Patent Document 1: Japanese Patent Application Laid-Open No. 2002-321509
Patent Document 2: Japanese Patent Application Laid-Open No. 9-164815

Disclosure of the Invention

Problems to be Solved by the Invention

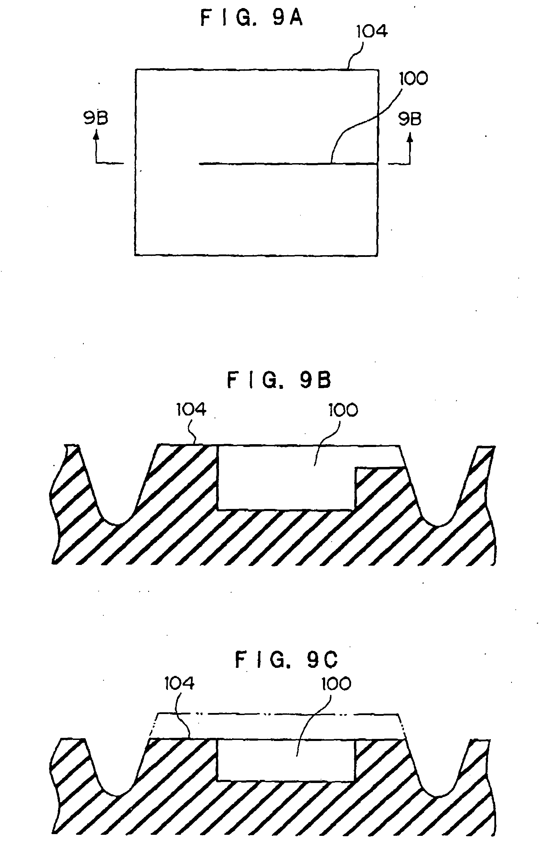

In order to suppress heel-and-toe wear of the main groove opening portion, in a case in which the sipe 100 is formed in the block 104 as shown in Fig. 9A, it is well known to make the depth of the sipe 100 at the opening portion more shallow than the depth at the central portion as shown in Fig. 9B. However, at the time of wear, the sipe 100 at the opening portion disappears (refer to Fig. 9C), and the wet performance and on-snow performance deteriorate, and it is difficult to achieve both irregular (eccentric) wear performance and wet and on-snow performances.

The present invention was made in order to solve the above-described problems, and an object thereof is to provide a pneumatic tire which can achieve both irregular (eccentric) wear performance and wet and on-snow performances.

Means for Solving the Problems

The invention recited in claim 1 is a pneumatic tire having blocks at a tread, wherein the tread has at least one or more sipes, and the sipe extends so as to have amplitude in a sipe longitudinal direction and in a depthwise direction, and a rigidity index F defined as follows differs in the sipe longitudinal direction, wherein the

$$\text{rigidity index } F = (1+\phi 1) \times (1+\phi 2) \times (1+\phi 3)$$

whereby

$\phi 1$: sipe amplitude (mm) at block stepping surface;
$\phi 2$: sipe amplitude (mm) when viewing the block orthogonal to a sipe wall surface and in a cross-section in the depthwise direction;
$\phi 3$: amplitude of a ridgeline extending in a depthwise direction of the sipe when viewing the wall surface of the sipe in plan view.

Next, operation of the pneumatic tire recited in claim 1 will be described:

The three-dimensional sipe, which has amplitude in the sipe longitudinal direction and the depthwise direction, is provided at the block. By setting the amounts of amplitude thereof so as to differ in the sipe longitudinal direction, it is possible to cause the rigidity in the vicinity of the sipe to have a distribution in the sipe longitudinal direction, while maintaining the sipe depth constant. For example, wear in front of and at the rear of the sipe can be made to be uniform along the sipe longitudinal direction.

The invention recited in claim 2 is characterized in that, in the pneumatic tire recited in claim 1, at least one end of the sipe opens at a block end, and the rigidity index F of the sipe at a portion opening at a block end is set to be higher than a rigidity index of the sipe at a block central portion.

Next, operation of the pneumatic tire recited in claim 2 will be described.

When the sipe opens at the block end, the rigidity in the vicinity of the block end decreases as compared with the block center. Accordingly, the rigidity index F of the sipe is set to be higher at the block end side than at the block central portion, and a decrease in rigidity in a vicinity of the block end is suppressed.

In this way, it becomes difficult for the block at the opening portion to deform, and heel-and-toe wear of the opening portion can be suppressed.

The invention recited in claim 3 is characterized in that, in the pneumatic tire recited in claim 1, a sipe pattern of the blocks disposed at one side of a tire equatorial plane, and a sipe pattern of the blocks disposed at another side have left and right symmetry across the tire equatorial plane, and within the block, the rigidity index F of the sipe gradually increases from a tread central side toward a tread end side.

Next, operation of the pneumatic tire recited in claim 3 will be described.

At the time of cornering of the vehicle, a large lateral force is inputted to the tire at the outer side when mounted to a vehicle.

Because the direction of input of the lateral force is the inner side direction from the vehicle outer side, at the sipe as well, it is preferable to increase the rigidity index at the outer side when mounted to a vehicle, i.e., the lateral force inputting side, and suppress deformation of the block.

At the aforementioned time of cornering, the ground-contact region (load) moves toward the outer side portion, when (the tire is) mounted to the vehicle, of the tread. Therefore, a large force is applied to a block at the outer side, when (the tire is) mounted to a vehicle, of the tire equatorial plane as compared with a block at the inner side when (the tire is) mounted to a vehicle.

Further, in a case in which there is no directionality at the tread pattern, which side of the tire equatorial plane of the tread is to be disposed at the vehicle outer side due to rotation or the like is not fixed.

Accordingly, in a case in which the sipe patterns have left and right symmetry across the tire equatorial plane, it is preferable to gradually increase the rigidity index F of the sipes from the tread central side toward the tread end side, and to suppress deformation of blocks on which a large force acts at the time of input of lateral force.

The invention recited in claim 4 is characterized in that, in the pneumatic tire recited in claim 1, a sipe pattern of the blocks disposed at one side of a tire equatorial plane, and a sipe pattern of the blocks disposed at another side do not have left and right symmetry across the tire equatorial plane, and within the block, the rigidity index F of the sipe gradually increases from an inner side when (the tire is) mounted to a vehicle toward an outer side when (the tire is) mounted to a vehicle.

Next, operation of the pneumatic tire recited in claim 4 will be described.

Differently than the case of claim 3, in a case in which the sipe pattern of the blocks disposed at one side of the tire equatorial plane and the sipe pattern of the blocks disposed at the other side do not have left and right symmetry across the tire equatorial plane, as the tire, there is a pattern having direction, and the direction of the tire when mounted to a vehicle is specified.

As described in claim 3, at the time of cornering of the vehicle, a large lateral force is inputted to the tire at the outer side when mounted to a vehicle. At this time, although the ground-contact region moves toward the outer side when mounted to a vehicle, lateral force is also inputted to the blocks at the inner side when mounted to a vehicle, although not as much as at the blocks at the outer side when mounted to a vehicle.

Therefore, in a case in which the directionality is specified, at the sipes at all of the blocks, it is preferable to increase the rigidity index at the outer side when mounted to a vehicle, i.e., at the lateral force inputting side, and suppress deformation of the blocks.

The invention recited in claim 5 is characterized in that, in the pneumatic tire recited in claim 2, the sipe amplitude $\phi 1$ is greater at the portion opening at the block end than at the block central portion.

Next, operation of the pneumatic tire recited in claim 5 will be described.

Generally, when a sipe opens at a block end (main groove), the block rigidity in a vicinity of the opening greatly decreases. However, by making the sipe amplitude $\phi 1$ be greater at the portion which opens at the block end than at the block central portion, a decrease in block rigidity in a vicinity of the opening is suppressed, and the block rigidity can be made to be uniform in the sipe longitudinal direction. In this way, heel-and-toe wear of the main groove opening portion can be suppressed.

The invention recited in claim 6 is characterized in that, in the pneumatic tire recited in claim 2, the sipe amplitude $\phi 2$ is greater at the portion opening at the block end than at the block central portion.

Next, operation of the pneumatic tire recited in claim 6 will be described.

By setting the sipe amplitude $\phi 2$ to be greater at the portion which opens at the block end than at the block central portion, a decrease in block rigidity in a vicinity of the opening is suppressed, and the block rigidity can be made to be uniform in the sipe longitudinal direction. In this way, heel-and-toe wear of the main groove opening portion can be suppressed.

The invention recited in claim 7 is characterized in that, in the pneumatic tire recited in claim 2, the sipe amplitude φ3 is greater at the portion opening at the block end than at the block central portion.

Next, operation of the pneumatic tire recited in claim 7 will be described.

By setting the sipe amplitude φ3 to be greater at the portion which opens at the block end than at the block central portion, a decrease in block rigidity in a vicinity of the opening is suppressed, and the block rigidity can be made to be uniform in the sipe longitudinal direction. In this way, heel-and-toe wear of the main groove opening portion can be suppressed.

The invention recited in claim 8 is characterized in that, in the pneumatic tire of any one of claims I through 7, one end of the sipe is at the block central portion.

Next, operation of the pneumatic tire recited in claim 8 will be described.

By disposing one end of the sipe at the block central portion, a decrease in block rigidity can be suppressed more than a case in which the sipe is made to traverse.

The invention recited in claim 9 is characterized in that, in the pneumatic tire of any one of claims 1 through 7, the sipe traverses the block in a tire axial direction.

Next, operation of the pneumatic tire recited in claim 9 will be described.

By making the sipe traverse the block in the tire axial direction, a high edge effect can be obtained.

Effects of the Invention

As described above, because the pneumatic tire recited in claim 1 has the above-described structure, it has the excellent effect that it can achieve both irregular wear performance and wet and on-snow performances.

Brief Description of the Drawings

Fig. 1 is a plan view of a tread of a pneumatic tire relating to a first embodiment.
Fig. 2A is a perspective view of a sipe wall surface.
Fig. 2B is a cross-sectional view of a main groove opening side of a sipe.
Fig. 2C is a cross-sectional view of an in-block final end side.
Fig. 2D is a plan view of a block.
Fig. 2E is a front view of the sipe wall surface.
Fig. 3 is a plan view of a tread of a pneumatic tire relating to a second embodiment.
Fig. 4A is a perspective view of a sipe wall surface of a pneumatic tire relating to a third embodiment.
Fig. 4B is a cross-sectional view of a main groove opening side of a sipe.
Fig. 4C is a cross-sectional view of a block central portion.
Fig. 4D is a plan view of a block.
Fig. 5A is a plan view of a tread of a pneumatic tire relating to comparative example 1.
Fig. 5B is a cross-sectional view along line 5B-5B of a block shown in Fig. 5A.
Fig. 6A is a plan view of a tread of a pneumatic tire relating to comparative example 2.
Fig. 6B is a cross-sectional view along line 6B-6B of a block shown in Fig. 6A.
Fig. 7A is a plan view of a tread of a pneumatic tire relating to an example.
Fig. 7B is a cross-sectional view along line 7B-7B of a block shown in Fig. 7A.
Fig. 8A is a side view of a new tire.
Fig. 8B is a side view of a tire after wear.
Fig. 9A is a plan view of a conventional block.
Fig. 9B is a cross-sectional view along line 9B-9B of a block shown in Fig. 9A (when a new article).
Fig. 9C is a cross-sectional view of the block after wear.

Best Modes for Implementing the Invention

[First Embodiment]

A pneumatic tire 10 relating to a first embodiment of the present invention will be described in detail hereinafter with reference to the drawings.

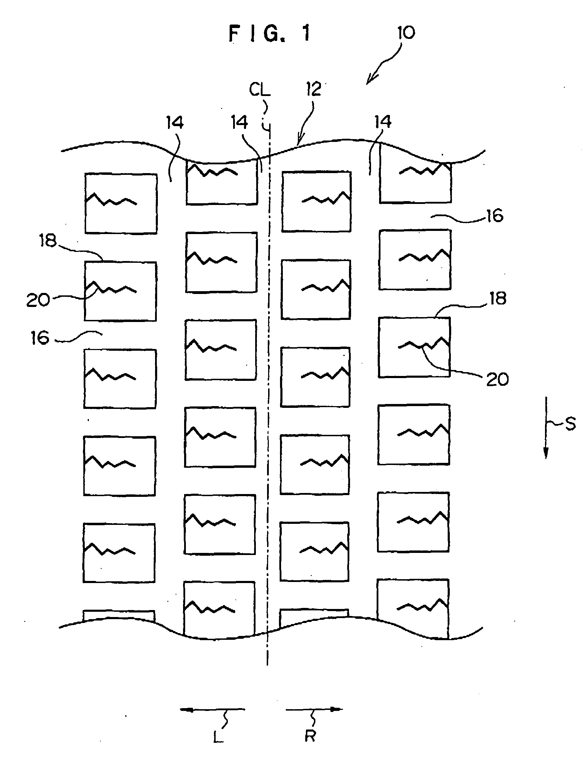

As shown in Fig. 1, circumferential direction main grooves 14, and a plurality of blocks 18 which are demarcated by lug grooves 16, are provided at a tread 12 of the pneumatic tire 10 of the present embodiment.

In the present embodiment, sipes 20 which extend in a tire axial direction (the direction of arrow L, and the direction of arrow R) are formed in the blocks 18 at the tire axial direction outermost sides.

In the present embodiment, one end portion of the sipe 20 opens at the block end at the tire axial direction outer side of the block 18, and the other end portion ends terminally at the interior of the block 18.

In this way, the pneumatic tire 10 of the present embodiment is a pattern which does not have directionality when mounted to a vehicle.

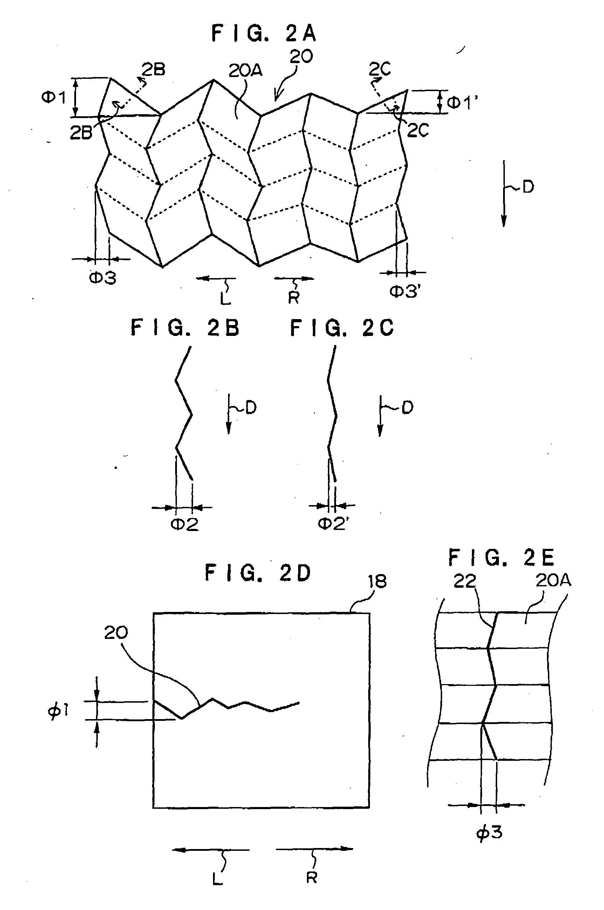

As shown in Fig. 2, the sipe 20 extends in a zigzag shape in the tire axial direction (the direction of arrow L and the direction of arrow R) and in a depthwise direction (the direction of arrow D), and is a so-called three-dimensional sipe which has an amplitude in each of the tire axial direction (the sipe longitudinal direction), a tire circumferential direction (the direction of arrow S), and the depthwise direction.

Note that the depth of the sipe 20 is constant.

The sipe 20 is characterized in that a rigidity index F shown as follows differs in the sipe longitudinal direction.

$$\text{rigidity index } F = (1+\phi 1) \times (1+\phi 2) \times (1+\phi 3)$$

$\phi 1$: Sipe amplitude (mm) at block stepping surface. Refer to Figs. 2A, 2D.

$\phi 2$: Sipe amplitude (mm) when viewing the block 18 orthogonal to the sipe 20 appearing at the stepping surface and in a cross-section in the depthwise direction. Refer to Figs. 2B, 2C.

$\phi 3$: Amplitude of a ridgeline 22 extending in a depthwise direction of the sipe 20 when viewing a wall surface 20A of the sipe 20 in plan view. Refer to Fig. 2E.

At the sipe 20 of the present embodiment, as shown in Fig. 1, the sipe amplitude $\phi 1$ at the tire axial direction outer side is set to be greater than a sipe amplitude $\phi 1'$ at a tire equatorial plane CL side, and further, as shown in Figs. 2B, 2C, the sipe amplitude $\phi 2$ at the tire axial direction outer side is set to be greater than a sipe amplitude $\phi 2'$ at the tire equatorial plane CL side.

Accordingly, the rigidity index F of the sipe 20 is greater at the tire axial direction outer side which opens at the block end, than at the tire equatorial plane CL side which does not open at the block end.

(Operation)

Because the sipe 20 having the wall surfaces 20A of the three-dimensional configuration is provided in the block 18, when receiving lengthwise direction compressive force at the time of contacting the ground, the mutual wall surfaces 20A strongly contact one another, and the effect of suppressing collapsing-in of the block 18 is great as compared with a sipe having a planar wall surface.

The larger the amplitude of the sipe 20 at a place, the greater the force at which the wall surfaces 20A contact one another at the time when the block is compressed, and the apparent block rigidity at the time of contacting the ground improves.

Generally, when a sipe opens at a block end (a main groove), the block rigidity in a vicinity of the opening greatly decreases. However, in the pneumatic tire 10 of the present embodiment, because the rigidity index F at the groove opening portion of the sipe 20 is set to be higher than the rigidity index F at the final end side within the block, a lowering of the rigidity of the block in a vicinity of the opening is suppressed while the depth of the sipe is maintained constant, and the block rigidity can be made to be uniform in the sipe longitudinal direction.

Therefore, heel-and-toe wear of the main groove opening portion can be suppressed. Further, because the depth of the sipe 20 is maintained constant, the problem of the conventional art that, at the time of wear, the sipe at the opening portion disappears and the wet performance and the on-snow performance deteriorate, does not arise.

Note that, in the pneumatic tire 10 of the present embodiment, because the pattern of the sipes 20 has left and right symmetry across the tire equatorial plane CL, there is no directionality when mounted to a vehicle.

At the time of cornering of the vehicle, a large lateral force is inputted to the pneumatic tire 10 at the outer side when mounted to a vehicle, and further, at the tread 12, the ground-contact region (load) moves toward the vehicle outer side. Therefore, a large force is applied to the blocks at the vehicle outer side of the tire equatorial plane, as compared with the blocks at the inner side when mounted to a vehicle.

Accordingly, at the blocks 18 which are disposed at the vehicle outer side across the tire equatorial plane CL, there is the need to gradually increase the rigidity index F of the sipe 20 from the tire equatorial plane CL side toward the tread end side.

In the pneumatic tire 10 of the present embodiment, because the sipe pattern has left and right symmetry across the tire equatorial plane CL, deformation of the blocks 18 at the time of cornering can be suppressed regardless of the direction of mounting the pneumatic tire 10.

Note that the sipe amplitude $\phi3$ at the main groove opening side may be set to be greater than a sipe amplitude $\phi3$' at the in-block final end side.

[Second Embodiment]

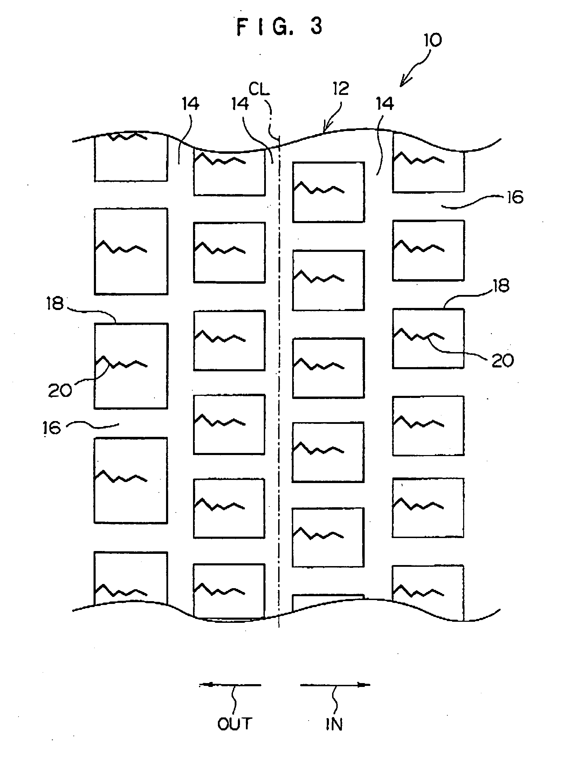

Next, the pneumatic tire 10 relating to a second embodiment of the present invention will be described in accordance with Fig. 3. Note that the same reference numerals are given to the same structures as in the first embodiment, and description thereof is omitted.

As shown in Fig. 3, in the pneumatic tire 10 of the present embodiment, the direction of the sipes 20 and the direction of mounting to a vehicle are specified such that the main groove opening sides of the sipes 20 are all at the vehicle outer side (the arrow OUT direction side; note that the arrow IN direction indicates the inner side direction when mounted to a vehicle).

(Operation)

At the time of cornering of the vehicle, although the ground-contact region moves toward the vehicle outer side, lateral force is inputted as well to the blocks 18 at the vehicle inner side, although not as much as at the blocks 18 at the vehicle outer side.

Therefore, in a case in which the directionality is specified, it is preferable to, at the sipes 20 of all of the blocks 18, increase the rigidity index at the vehicle outer side, i.e., the lateral force input side, and suppress deformation of the blocks 18 at the time of cornering.

[Third Embodiment]

Next, the pneumatic tire 10 relating to a second embodiment of the present invention will be described in accordance with Fig, 4. Note that the same reference numerals are given to the same structures as in the previously-described embodiments, and description thereof is omitted.

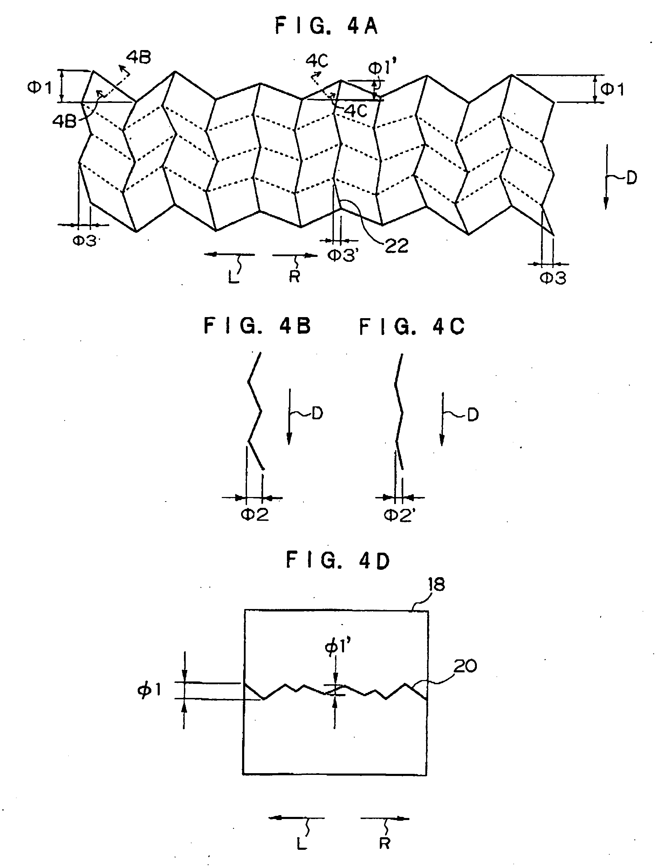

As shown in Fig. 4, at the pneumatic tire 10 of the present embodiment, the sipe 20 traverses the block 18 in the tire axial direction (the direction of arrow L, and the direction of arrow R). Accordingly, a high edge effect can be obtained as compared with a case in which the sipe 20 does not traverse.

In a case in which the both end portions of the sipe 20 respectively open at the main groove sides, it is preferable to set the rigidity indices F at the both sides to be greater than the rigidity index F at the central side.

Accordingly, in the present embodiment, the sipe amplitudes $\phi1$, $\phi2$ at the both sides are set to be greater than the sipe amplitudes $\phi1$, $\phi2$ at the center.

Note that the sipe amplitudes $\phi3$ at the both sides may be set to be greater than the sipe amplitude $\phi3$' at the center.

(Examples)

In order to confirm the effects of the present invention, two types of pneumatic tires relating to comparative examples and one type of pneumatic tire of an example to which the present invention was applied were readied, were mounted to an actual vehicle and traveling tests were carried out, and comparison was carried out with respect to on-snow starting ability, on-snow braking ability, wet handling stability, and irregular wear resistance.

On-snow starting ability: The vehicle was made to start on snow, and the time until the speed reached 25 km/h was measured. A shorter time means a better performance.

On-snow braking ability: The brake was applied, and the distance from a vehicle speed of 25 km/h to stopping was measured. A shorter distance means a better performance.

Wet handling stability: An evaluation of feeling by a test driver when traveling on a wet road surface. A perfect score for evaluation is 10 points, and a higher number means a better performance.

Amount of step between front and rear of sipe: After traveling for 8000 km at an average speed of 35 km/h on a test course formed from a dry paved road, the amount of the step between the front and the rear of the sipe (in a vicinity of the main groove opening) was measured. A smaller step amount means a better performance.

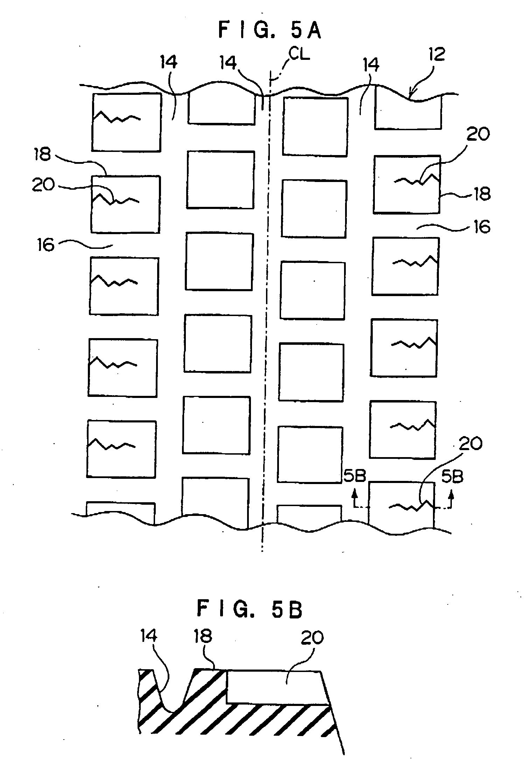

The tread pattern of comparative example 1 is shown in Fig. 5A, and a cross-sectional view along the sipe of the block of comparative example 1 is shown in Fig. 5B.

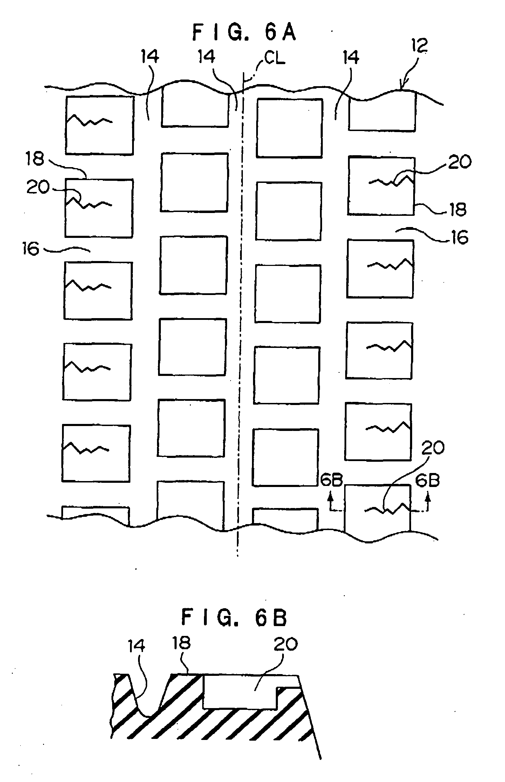

The tread pattern of comparative example 2 is shown in Fig. 6A, and a cross-sectional view along the sipe of the block of comparative example 2 is shown in Fig. 6B.

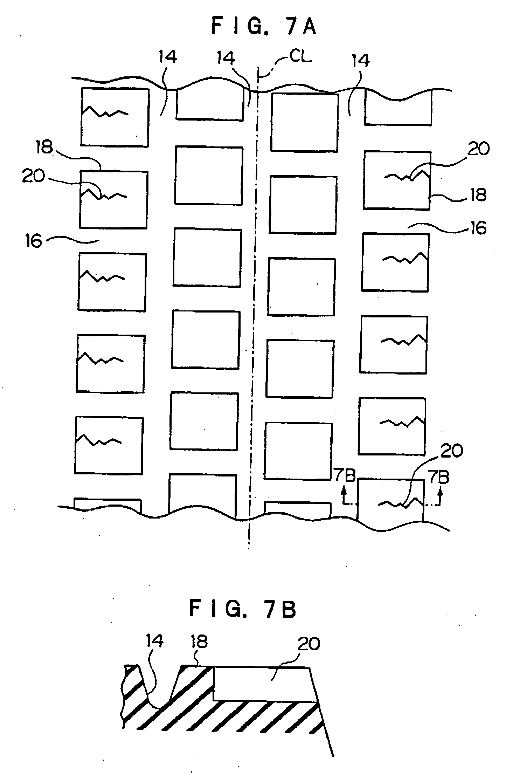

The tread pattern of the example is shown in Fig. 7A, and a cross-sectional view along the sipe of the example is shown in Fig. 7B.

As shown in Fig. 5B, the tire of comparative example 1 uses a sipe at which the rigidity index F in the axial direction and the depth are constant.

As shown in Fig. 6B, the tire of comparative example 2 uses a sipe at which the rigidity index F in the axial direction is constant, but the sipe depth of the portion opening to the circumferential direction main groove is made to be shallow.

As shown in Fig. 7B, the tire of the example uses a sipe at which the rigidity index F in the axial direction differs, and the rigidity index F of the portion opening to the circumferential direction main groove is set to be greater than the rigidity index F of the in-block final end portion.

The sipes in all of comparative example 1, comparative example 2 and the example extend in zigzag shapes in the tire axial direction and in the depthwise direction, but the values of the sipe amplitudes $\phi1 \sim 3$ differ as shown in following Table 1.

Namely, in comparative example 1 and comparative example 2, the rigidity index F is constant in the sipe longitudinal direction, whereas in the example, the rigidity index F at the opening side is set to be larger.

Note that the size of the test tire was 205/60R15 91 V in all cases.

[Table 1]

| | sipe depth (mm) | | sipe configuration at block central portion | | | | sipe configuration at opening block to main groove | | | |
|---|---|---|---|---|---|---|---|---|---|---|
| | block central portion | opening portion to main groove | $\phi1$ (mm) | $\phi2$ (mm) | $\phi3$ (mm) | rigi-dity index F | $\phi1$ (mm) | $\phi2$ (mm) | $\phi3$ (mm) | rigi-dity index F |
| comp. ex. 1 | 7 | 7 | 2 | 2 | 2 | 27 | 2 | 2 | 2 | 27 |
| comp. ex. 2 | 7 | 2 | 2 | 2 | 2 | 27 | 2 | 2 | 2 | 27 |
| ex. | 7 | 7 | 2 | 2 | 2 | 27 | 4 | 4 | 4 | 125 |

The evaluation of the test is as stated in following Table 2.

[Table 2]

| | amount of step between front and rear of sipe (mm) | performances after traveling 8000 km | | |
|---|---|---|---|---|
| | | on-snow starting ability (sec) | on-snow braking ability (m) | wet handling stability |
| comp. ex. 1 | 1.1 | 10.2 | 11.8 | 6.5 |
| comp. ex. 2 | 0.6 | 12.1 | 13.2 | 6.0 |
| ex. | 0.4 | 10.3 | 11.7 | 7.0 |

From the results of the test, it is understood that the tire of the example to which the present invention is applied has good performances even after wear, with respect to on-snow starting ability, on-snow braking ability, and wet handling stability.

Industrial Applicability

Applicable to a vehicle for which it is desired to achieve both irregular wear performance, and wet and on-snow performances.

Description of the Reference Numerals

| 10 | pneumatic tire |
|---|---|
| 12 | tread |
| 14 | circumferential direction main groove |
| 18 | block |
| 20 | sipe |
| 20A | wall surface |

**Claims**

1. A pneumatic tire having blocks at a tread, wherein
the tread has at least one or more sipes, and
the sipe extends so as to have amplitude in a sipe longitudinal direction and in a depthwise direction, and a rigidity index F defined as follows differs in the sipe longitudinal direction, wherein the

$$\text{rigidity index } F = (1+\phi1)\times(1+\phi2)\times(1+\phi3) ,$$

whereby

$\phi$1: sipe amplitude (mm) at block stepping surface;
$\phi$2: sipe amplitude (mm) when viewing the block orthogonal to the sipe appearing at the stepping surface and in a cross-section in the depthwise direction;
$\phi$3: amplitude of a ridgeline extending in a depthwise direction of the sipe when viewing a wall surface of the sipe in plan view.

2. The pneumatic tire of claim 1, wherein
at least one end of the sipe opens at a block end, and
the rigidity index F of the sipe at a portion opening at a block end is set to be higher than a rigidity index of the sipe at a block central portion,

3. The pneumatic tire of claim 1, wherein a sipe pattern of the blocks disposed at one side of a tire equatorial plane, and a sipe pattern of the blocks disposed at another side have left and right symmetry across the tire equatorial plane, and
within the block, the rigidity index F of the sipe gradually increases from a tread central side toward a tread end side.

4. The pneumatic tire of claim 1, wherein a sipe pattern of the blocks disposed at one side of a tire equatorial plane, and a sipe pattern of the blocks disposed at another side do not have left and right symmetry across the tire equatorial plane, and
within the block, the rigidity index F of the sipe gradually increases from an inner side when mounted to a vehicle toward an outer side when mounted to a vehicle.

5. The pneumatic tire of claim 2, wherein the sipe amplitude $\phi$1 is greater at the portion opening at the block end than at the block central portion.

6. The pneumatic tire of claim 2, wherein the sipe amplitude $\phi$2 is greater at the portion opening at the block end than at the block central portion.

7. The pneumatic tire of claim 2, wherein the sipe amplitude $\phi$3 is greater at the portion opening at the block end than at the block central portion.

8. The pneumatic tire of any one of claims 1 through 7, wherein one end of the sipe is at the block central portion.

9. The pneumatic tire of any one of claims 1 through 7, wherein the sipe traverses the block in a tire axial direction.

**Patentansprüche**

1. Pneumatischer Reifen, welcher Blöcke und ein Profil aufweist, wobei
   das Profil zumindest eine oder mehrere Rillen aufweist, und
   die Rille sich so erstreckt, um eine Amplitude in einer Rillenlängsrichtung und in einer Tiefenrichtung aufzuweisen, und ein wie folgt definierter Festigkeitsindex (F) in der Rillenlängsrichtung variiert, wobei der

$$\text{Festigkeitsindex (F)} = (1 + \Phi1) \times (1 + \Phi2) \times (1 + \Phi3),$$

   wobei

   $\Phi1$: Rillenamplitude (mm) bei einer Blockstufungsoberfläche;
   $\Phi2$: Rillenamplitude (mm) wenn der Block orthogonal zu der Rille angesehen wird, welche an der Stufungsoberfläche und in einem Querschnitt in der Tiefenrichtung erscheint;
   $\Phi3$: Amplitude einer Kammlinie, welche sich in Tiefenrichtung der Rille erstreckt, wenn eine Wandoberfläche der Rille in Ebenenansicht angeschaut wird.

2. Pneumatischer Reifen nach Anspruch 1, wobei
   zumindest ein Ende der Rille sich an einem Blockende öffnet, und
   der Festigkeitsindex F der Rille bei einem Abschnitt, welcher sich an einem Blockende öffnet, höher eingerichtet ist als ein Festigkeitsindex der Rille an einem blockzentralen Abschnitt.

3. Pneumatischer Reifen nach Anspruch 1, wobei ein Rillenmuster der Blöcke, welches auf einer Seite angeordnet ist, und ein Rillenmuster der Blöcke, welches auf einer anderen Seite einer Reifenäquatorialebene angeordnet ist, linke und rechte Symmetrie über die Reifenäquatorialebene aufweisen, und
   wobei in dem Block, der Festigkeitsindex F der Rille allmählich von einer profilzentralen Seite zu einer Profilendseite ansteigt.

4. Pneumatischer Reifen nach Anspruch 1, wobei ein Rillenmuster der Blöcke, welches auf einer Seite einer Reifenäquatorialebene angeordnet ist, und ein Rillenmuster der Blöcke, welche auf einer anderen Seite angeordnet sind, keine linke und rechte Symmetrie über die Reifenäquatorialebene aufweisen, und
   wobei in dem Block der Festigkeitsindex (F) der Rille fortschreitend von einer inneren Seite, wenn an einem Fahrzeug befestigt, zu einer äußeren Seite, wenn an einem Fahrzeug befestigt, ansteigt.

5. Pneumatischer Reifen nach Anspruch 2, wobei die Rillenamplitude $\varphi1$ an der Abschnittsöffnung an dem Blockende größer ist als an dem blockzentralen Abschnitt.

6. Pneumatischer Reifen nach Anspruch 2, wobei die Rillenamplitude $\varphi2$ an der Abschnittsöffnung an dem Blockende größer ist als an dem blockzentralen Abschnitt.

7. Pneumatischer Reifen nach Anspruch 2, wobei die Rillenamplitude $\varphi3$ an der Abschnittsöffnung an dem Blockende größer ist als an dem blockzentralen Abschnitt.

8. Pneumatischer Reifen nach einem der Ansprüche 1 bis 7, wobei sich ein Ende der Rille an dem blockzentralen Abschnitt befindet.

9. Pneumatischer Reifen nach einem der Ansprüche 1 bis 7, wobei die Rille den Block in einer reifenaxialen Richtung durchquert.

**Revendications**

1. Pneumatique ayant des blocs au niveau d'une bande de roulement, dans lequel :

   la bande de roulement comporte au moins une ou plusieurs lamelles, et
   la lamelle s'étend de manière à avoir une amplitude dans une direction longitudinale de lamelle et dans une direction de la profondeur, et un indice de rigidité F défini comme suit diffère dans la direction longitudinale de lamelle, dans lequel

$$\text{l'indice de rigidité } F = (1+\phi1) \times (1+\phi2) \times (1+\phi3),$$

de telle sorte que

$\phi1$ : amplitude de lamelle (mm) au niveau de la surface étagée de bloc ;
$\phi2$ : amplitude de lamelle (mm) lorsque l'on regarde le bloc orthogonal à la lamelle apparaissant au niveau de la surface étagée et en coupe transversale dans la direction de la profondeur ;
$\phi3$ : amplitude d'une ligne de nervure s'étendant dans une direction de la profondeur de la lamelle lorsque l'on regarde une surface de paroi de la lamelle selon une vue en plan.

2. Pneumatique selon la revendication 1, dans lequel
au moins une extrémité de la lamelle s'ouvre au niveau d'une extrémité de bloc, et
l'indice de rigidité F de la lamelle, au niveau d'une ouverture de partie à une extrémité de bloc, est fixé pour être plus élevé qu'un indice de rigidité de la lamelle au niveau d'une partie centrale de bloc.

3. Pneumatique selon la revendication 1, dans lequel un motif de lamelle des blocs, disposé sur un côté d'un plan équatorial de pneu, et un motif de lamelle des blocs, disposé sur un autre côté, ont une symétrie gauche et droite en travers du plan équatorial de pneu, et
au sein du bloc, l'indice de rigidité F de la lamelle augmente progressivement d'un côté central de bande de roulement vers un côté d'extrémité de bande de roulement.

4. Pneumatique selon la revendication 1, dans lequel un motif de lamelle des blocs, disposé sur un côté d'un plan équatorial de pneu, et un motif de lamelle des blocs, disposé sur un autre côté, n'ont pas une symétrie gauche et droite en travers du plan équatorial de pneu, et
au sein du bloc, l'indice de rigidité F de la lamelle augmente progressivement d'un côté intérieur lorsque monté sur un véhicule vers un côté extérieur lorsque monté sur un véhicule.

5. Pneumatique selon la revendication 2, dans lequel l'amplitude de lamelle $\phi1$ est plus grande au niveau de l'ouverture de partie à l'extrémité de bloc qu'à la partie centrale de bloc.

6. Pneumatique selon la revendication 2, dans lequel l'amplitude de lamelle $\phi2$ est plus grande au niveau de l'ouverture de partie à l'extrémité de bloc qu'à la partie centrale de bloc.

7. Pneumatique selon la revendication 2, dans lequel l'amplitude de lamelle $\phi3$ est plus grande au niveau de l'ouverture de partie à l'extrémité de bloc qu'à la partie centrale de bloc.

8. Pneumatique selon l'une quelconque des revendications 1 à 7, dans lequel une extrémité de la lamelle se situe au niveau de la partie centrale de bloc.

9. Pneumatique selon l'une quelconque des revendications 1 à 7, dans lequel la lamelle traverse le bloc dans une direction axiale de pneu.

FIG. 1

FIG. 2A

FIG. 2B       FIG. 2C

FIG. 2D

FIG. 2E

## F I G. 3

FIG. 4A

FIG. 4B          FIG. 4C

FIG. 4D

## F I G. 5A

## F I G. 5B

FIG. 6A

FIG. 6B

# F I G. 7A

# F I G. 7B

# F I G. 8 A

ROTATION
DIRECTION

~102

100

NEW ARTICLE

# F I G. 8 B

ROTATION
DIRECTION

~102

100

STEP

WORN ARTICLE

F I G. 9 A

F I G. 9 B

F I G. 9 C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002321509 A
- JP 9164815 A